# EUROPÄISCHE PATENTSCHRIFT

(11) **EP 2 508 749 B1**
(45) Veröffentlichungstag und Bekanntmachung des Hinweises auf die Patenterteilung: **04.09.2013**
(21) Anmeldenummer: 11160956.6
(22) Anmeldetag: 04.04.2011
(51) Int. Cl.: F03D 1/00, F03D 9/02

(54) **Verfahren zum Montieren einer elektrischen Maschine**
Method for mounting an electric machine
Procédé destiné au montage d'une machine électrique

(43) Veröffentlichungstag der Anmeldung: 10.10.2012
(73) Patentinhaber: Siemens Aktiengesellschaft, 80333 München (DE)
(72) Erfinder: Feher, Kornel, 94099 Ruhstorf (DE); Hartmann, Ulrich, Dr., 14197 Berlin (DE); Junge, Martin, 94481 Grafenau (DE); Jöckel, Andreas, Dr., 90408 Nürnberg (DE); Kristl, Martin, 94107 Untergriesbach (DE); Luchs, Wilfried, 13629 Berlin (DE); Memminger, Oliver, 94127 Neuburg A.D. Inn (DE); Mucha, Joachim, 12277 Berlin (DE); Möhle, Axel, Dr., 12163 Berlin (DE)

(56) Entgegenhaltungen:
- WO-A1-00/60719
- WO-A2-2008/116464
- DE-A1-102009 005 956

## Beschreibung

Die vorliegende Erfindung betrifft ein Verfahren zum Montieren einer elektrischen Maschine, insbesondere eines Generators für eine Windkraftanlage. Darüber hinaus betrifft die vorliegende Erfindung eine derartige elektrische Maschine mit einem Stator und einem Rotor.

Windkraftanlagen sind in der Regel mit verhältnismäßig großen Generatoren ausgestattet. Diese Generatoren werden vielfach erst vor Ort montiert. Dies gilt insbesondere auch für die beiden Komponenten Rotor und Stator des Generators. Davon unabhängig ist, ob es sich um einen Außenstator und Innenrotor oder um einen Außenrotor und Innenstator handelt.

Da der Rotor üblicherweise mit Permanentmagneten besetzt ist, übt er ständig eine magnetische Kraft auf Statorkomponenten aus. Dies hat zur Folge, dass die Komponenten des Stators nur mit Mühe gegenüber den Komponenten des Rotors platziert und montiert werden können. Diese Probleme sind besonders eklatant bei direkt getriebenen Windgeneratoren, die einen sehr großen Durchmesser besitzen.

Bislang gibt es Montageverfahren, bei denen der Rotor als Ganzer vormontiert ist und vor Ort im Falle eines Innenrotors mit Statorsegmenten umgeben wird, die miteinander einen kompletten Statorring ergeben. Bei derartigen segmentierten Maschinen besteht zwischen den Segmenten jeweils eine Teilfuge. Vor dem Festschrauben der Segmente ist das Ausfüttern der Teilfugen mit Blechen entsprechender Dicke erforderlich, um einen durchgängigen Ring zu erhalten. Das Ausfüttern der Teilfugen erfordert Fingerspitzengefühl und Erfahrung. Es ist auf einer Baustelle unter Umständen im Freien nicht immer ohne Weiteres durchführbar.

Als Stand der Technik kann Dokument DE 10 2009 005 956 A1 herangezogen werden, das eine günstige Montagemöglichkeit für einen Magnetring für Windkraftanlagen bereitstellt.

Die Aufgabe der vorliegenden Erfindung besteht darin, ein Montageverfahren für eine elektrische Maschine vorzuschlagen, das einfach zu realisieren ist und insbesondere einen komfortablen Transport der zu montierenden Teile zu einem Bestimmungsort ermöglicht. Darüber hinaus soll eine diesbezüglich geeignete elektrische Maschine vorgeschlagen werden.

Erfindungsgemäß wird diese Aufgabe gelöst durch ein Verfahren zum Montieren einer elektrischen Maschine, insbesondere eines Generators für eine Windkraftanlage, durch
- Montieren je eines Innensegments an mehrere Außensegmente mit Hilfe jeweils mindestens eines Fixierelements, so dass mehrere Segmentmodule entstehen, bei denen zwischen dem Innensegment und dem Außensegment jeweils ein vorgegebener Luftspalt besteht, wobei die Innensegmente und Außensegmente Ringsegmente sind und dem Rotor oder Stator des Generators zugeordnet sind,
- Befestigen der Innensegmente der mehreren Segmentmodule an einer Innenmontageeinrichtung, so dass die Segmentmodule einen vollständigen Ring bilden,
- Befestigen der Außensegmente der mehreren Segmentmodule an einer Außenmontageeinrichtung, und
- Entfernen der Fixierelemente zwischen den Innensegmenten
   und den Außensegmenten.

Darüber hinaus wird erfindungsgemäß bereitgestellt eine elektrische Maschine insbesondere für eine Windkraftanlage mit
- einem Stator und
- einem Rotor, wobei
- der Rotor und Stator der elektrischen Maschine jeweils voneinander trennbare Innensegmente oder voneinander trennbare Außensegmente aufweist,
- die Innensegmente und Außensegmente Ringsegmente sind,
- je eines der Innensegmente einem der mehreren Außensegmenten zugeordnet ist,
- zwischen den Innensegmenten und den Außensegmenten jeweils ein vorgegebener Luftspalt besteht,
- die Innensegmente an einer Innenmontageeinrichtung zu einem Ring befestigt sind, und die Außensegmente an einer Außenmontageeinrichtung zu einem Ring befestigt sind.

In vorteilhafter Weise werden also bei dem erfindungsgemäßen Verfahren paarweise Innen- und Außensegmente bei einer Vormontage aneinander fixiert, wobei beide durch einen vorgegebenen Luftspalt voneinander getrennt sind. Es ergibt sich damit ein ringsegmentförmiges Segmentmodul, das ein Rotorsegment und ein Statorsegment aufweist. Derartige Segmentmodule lassen sich einfacher handhaben als beispielsweise ein komplett vormontierter Rotor. Außerdem ist durch die voneinander fest beabstandeten Segmente automatisch der korrekte Luftspalt zwischen Rotor und Stator gegeben, wenn die Segmentmodule komplett ringförmig montiert sind. Demgegenüber muss bei der herkömmlichen Montage auch stets beachtet werden, dass der gewünschte Luftspalt eingehalten wird.

Vorzugsweise werden die Innensegmente und/oder die Außensegmente in Umfangsrichtung aneinander befestigt. Durch diese direkte Montage aneinander in Umfangsrichtung sind sie nicht nur indirekt über die Innen- und Außenmontageeinrichtungen aneinandergekoppelt. Dadurch wird die Festigkeit von Rotor und Stator verbessert.

Darüber hinaus können die Innensegmente und/oder Außensegmente jeweils einen Flansch zum Befestigen an der Innenmontageeinrichtung (z.B. Nabe) oder Außenmontageeinrichtung aufweisen. Mit einem derartigen Flansch lassen sich beispielsweise die Innensegmente an der Nabe der elektrischen Maschine befestigen. Der Flansch ragt hierzu von den Innensegmenten radial nach innen. Bei den Außensegmenten kann der Flansch radial nach außen ragen, sodass sie damit an einem entsprechenden Außenring befestigt werden können.

Gemäß einer Weiterbildung ist vorgesehen, dass jedes der Innensegmente und Außensegmente sich in Umfangsrichtung über einen ersten Winkelbereich erstreckt, jedes der Innensegmente und Außensegmente einen Flansch aufweist, und jeder Flansch sich über einen kleineren Winkelbereich als den ersten Winkelbereich erstreckt. Damit stoßen die Flanschsegmente bei der Montage nicht aneinander und führen dadurch auch nicht zu unerwünscht großen Fugen zwischen den Segmentmodulen.

Des Weiteren können die Segmentmodule so an der Innenmontageeinrichtung und der Außenmontageeinrichtung befestigt werden, dass zwischen jeweils benachbarten Segmentmodulen in Umfangsrichtung ein Spalt verbleibt. Dieser bewusst vorgesehene Spalt dient dazu, Toleranzen auszugleichen. Damit sind weniger genaue Toleranzen bei der Fertigung der Segmentmodule, d.h. der Statorsegmente und Rotorsegmente, einzuhalten. Hierdurch ergeben sich Kostenvorteile bei der Fertigung.

In jeden Spalt zwischen den Segmentmodulen kann ein Verbindungselement eingefügt werden, um die angrenzenden Segmente miteinander zu verbinden. Dabei kann jedes Verbindungselement aus mehreren Komponenten, z.B. Einzelblechen, bestehen. Hierdurch lassen sich unterschiedlich breite Spalten exakt füllen, die durch die Fertigungstoleranzen entstehen.

Außerdem kann in jeden Spalt von außen ein Dichtelement eingefügt werden. Derartige Dichtelemente stellen sicher, dass beispielsweise keine Feuchtigkeit oder Verschmutzung durch den Toleranzspalt in den Luftspalt der elektrischen Maschine gelangt.

Die vorliegende Erfindung wird nun anhand der beigefügten Zeichnungen näher erläutert, in denen zeigen:
- FIG 1: eine Seitenansicht eines erfindungsgemäßen Segment-moduls;
- FIG 2: einen Ausschnitt einer Nabe, auf den mehrere Segmentmodule montiert sind/werden; und
- FIG 3: einen vergrößerten Ausschnitt einer Trennfuge zwischen zwei Segmentmodulen.

Die nachfolgend näher geschilderten Ausführungsbeispiele stellen bevorzugte Ausführungsformen der vorliegenden Erfindung dar.

Es soll beispielsweise ein direkt getriebener Windgenerator mit einem großen Innenrotor und einem entsprechend großen Außenstator gefertigt werden. Das Fertigungsverfahren lässt sich aber genauso für jede andere elektrische Maschine anwenden, unabhängig davon, ob sie einen Innenrotor oder einen Außenrotor besitzt.

Der Kerngedanke der vorliegenden Erfindung besteht darin, dass sowohl der Stator als auch der Rotor segmentiert werden und die Segmente paarig zu einem Modul vorgefertigt werden. Zweck dieser Segmentierung und Vormontage ist ein vereinfachter Transport und eine einfache Endmontage an dem vorgesehenen Ort, was insbesondere für Offshore-Windkraftanlagen von Vorteil ist.

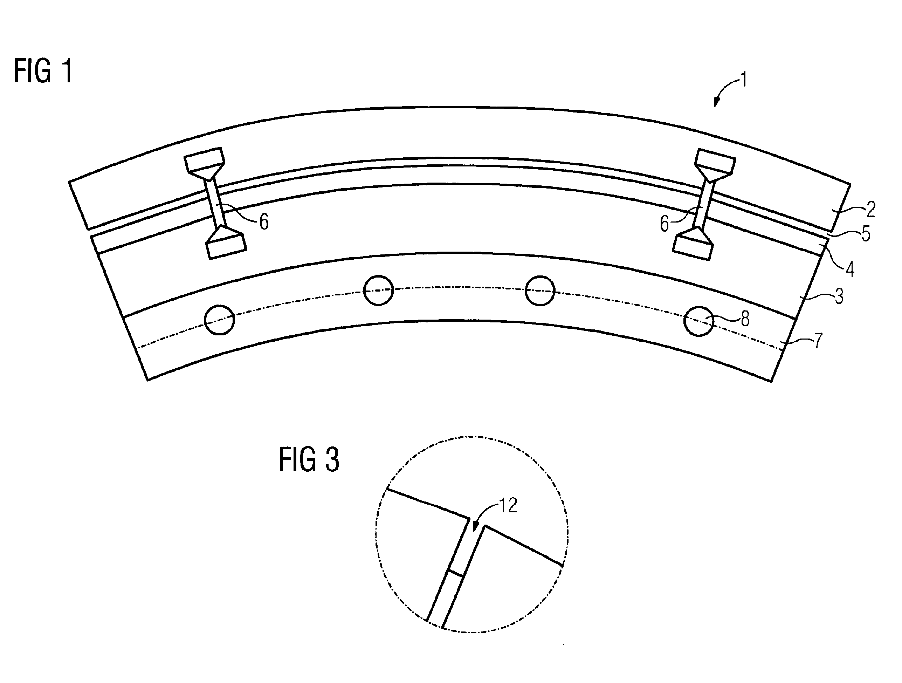

FIG 1 zeigt eine Stirnseitenansicht eines erfindungsgemäßen Segmentmoduls 1. Acht derartige Segmentmodule fügen sich hier zu einem vollständigen Ring. Demnach erstreckt sich jedes Segmentmodul hier über einen Winkelbereich von 45°. Es bleibt natürlich unbenommen, die Segmentmodule hinsichtlich der Winkelabmessungen größer oder kleiner zu wählen. Insbesondere kann ein Segmentmodul auch 90° oder 180° aufweisen.

Das Segmentmodul 1 weist hier ein Außensegment 2 und ein Innensegment 3 auf. Da die elektrische Maschine im vorliegenden Beispiel einen Innenrotor besitzt, handelt es sich bei dem Außensegment 2 um ein Statorsegment und bei dem Innensegment 3 um ein Rotorsegment. Das Rotor- bzw. Innensegment 3 weist in FIG 1 symbolisch angedeutete Permanentmagnete 4 auf. Ein ringförmiger Luftspalt 5 liegt konzentrisch zwischen dem ringsegmentförmigen Außensegment 2 und dem ringsegmentförmigen Innensegment 3.

Das Außensegment 2 und das Innensegment 3 sind durch Fixierelemente 6 so aneinander befestigt, dass der Luftspalt 5 gewährleistet wird. Im vorliegenden Fall sind zwei Fixierelemente 6 zu erkennen. Damit ein stabiles Segmentmodul erzielt wird, befinden sich an beiden Stirnseiten des Segmentmoduls beispielsweise jeweils zwei derartige Fixierelemente. Es können aber auch mehr als zwei Fixierelemente pro Stirnseite vorgesehen sein. Grundsätzlich ist es aber auch möglich, dass die Fixierelemente 6 axial durch das Segmentmodul 1 hindurchreichen, sodass in diesem Fall nur zwei derartige Fixierelemente 6 notwendig sind.

Die Fixierelemente 6 sind in axialer Richtung aus dem Segmentmodul 1 heraus bewegbar. Sie stellen nicht nur eine Transportsicherung dar, sondern sie gewährleisten auch eine definierte Luftspaltbreite.

An der nach innen gerichteten Seite des Innensegments 3 ist ein Flanschsegment 7 angebracht. Es ragt radial nach innen und erstreckt sich im Wesentlichen über den gleichen Winkelbereich wie das Außensegment 2 und das Innensegment 3. Darüber hinaus besitzt es hier für die Befestigung axial verlaufende Bohrungen 8.

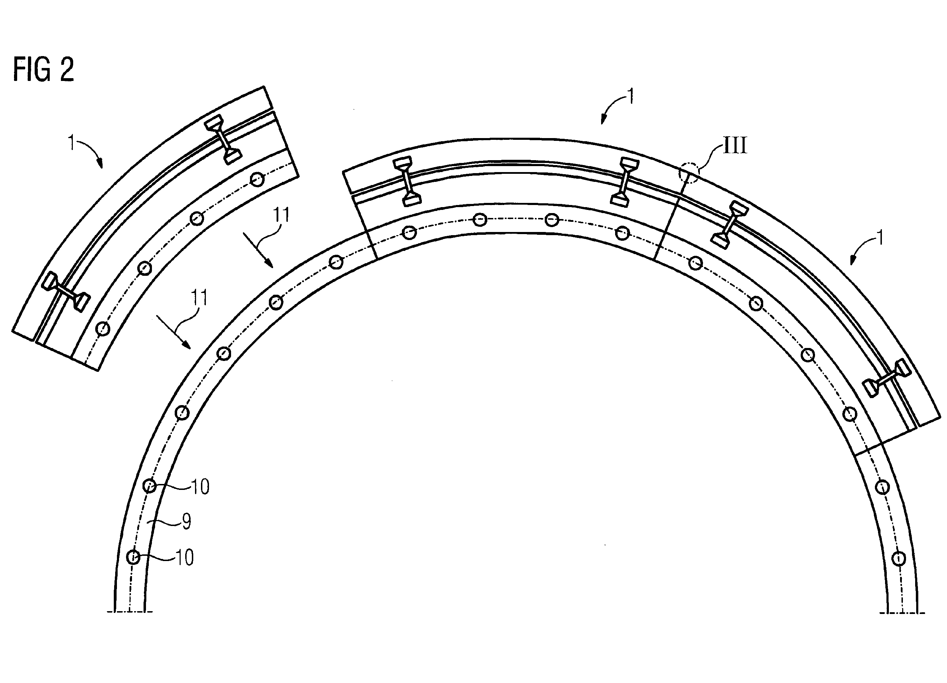

Derartige Segmentmodule 1 werden nun beispielsweise gemäß FIG 2 an einer Nabe 9 befestigt. Die Nabe 9 ist hier nur zur Hälfte in der Stirnseitenansicht dargestellt, sodass hier nur ein Halbring zu erkennen ist. Bei der Nabe 9 handelt es sich beispielsweise um eine Hohlwelle. Sie besitzt in ihrer Stirnseite hier in Umfangsrichtung gleich verteilt Bohrungen 10. Sie dienen zum Anschrauben der Flansche 7 der Innensegmente 3 der Segmentmodule 1. Bei der Montage werden die einzelnen Segmentmodule 1 gemäß den Pfeilen 11 radial auf die Nabe 9 aufgesetzt, sodass letztlich eine vollständige elektrische Maschine mit Rotor und Stator entsteht.

Das gesamte Montageverfahren der elektrischen Maschine besteht aus den folgenden vier wesentlichen Schritten:
a) Segmentmodule 1 einschließlich Außensegment 2 und Innensegment 3 und Fixierelementen 6 gegebenenfalls einschließlich Flansch 7 werden vormontiert und zum Bestimmungsort transportiert.
b) Die Segmentmodule 1 werden an eine Innenmontageeinrichtung, z.B. Nabe, montiert.
c) Die Segmentmodule 1 werden an eine Außenmontageeinrichtung, z.B. eine Statortrageeinheit, befestigt.
d) Die Fixierelemente 6 werden entnommen, sodass der Rotor (Nabe 9 und Innensegmente 3) gegenüber dem Stator (Außensegmente 2) drehbar ist.

Das Vormontieren und Bereitstellen von Segmentmodulen 1 hat den Vorteil, dass der Luftspalt 5 bereits werkseitig eingestellt werden kann. Er wird während der Montage durch die Fixierelemente 6 gewährleistet und bleibt am Ende der Montage nach der Entnahme der Fixierelemente 6 erhalten. Die Fixierelemente 6 nehmen dabei insbesondere die Kräfte auf, die die Permanentmagnete 4 des Rotorsegments 3 auf das Statorsegment 2 ausüben.

Sowohl das Statorsegment 6 als auch das Rotorsegment 3 erstrecken sich hier über den gleichen Winkelbereich, z.B. 45°. Der am Innenrotor - bzw. Innensegment 3 radial nach innen angebrachte Flansch 7 besitzt ebenfalls Kreisbogenform und erstreckt sich bei einer speziellen Ausführungsform nicht über den gesamten Winkelbereich wie das Innensegment 3 dadurch kann verhindert werden, dass aus Toleranzgründen übermäßig große Spalte zwischen den einzelnen Segmentmodulen 1 im montierten Zustand entstehen.

Bei der Montage werden die paarigen Segmente, d.h. die Segmentmodule 1, wie erwähnt, zunächst auf der Nabe platziert und fixiert. Beim Innenrotor dreht sich die Nabe 9, beim Außenrotor ist diese Nabe 9 Teil der Tragstruktur. In jedem Fall sind die Innensegmente 3 dadurch zentrisch ausgerichtet. Da die Außensegmente 2 (Stator beim Innenläufer, Rotor beim Außenläufer) über den Luftspalt 5 genau auf die Innensegmente 3 fixiert sind (Fixierelemente 6), sind auch diese ausgerichtet und es ist ein konstant großer Luftspalt 5 sichergestellt. Fertigungstoleranzen werden durch die angesprochenen Trennfugen 12 zwischen den Segmentmodulen 1 aufgefangen. In FIG 3 ist eine derartige Trennfuge 12 vergrößert dargestellt.

Ein in FIG 2 nicht dargestellter äußerer Flansch an jedem Segmentmodul 1 hat keine zentrierende Eigenschaft, damit keine Überbestimmung gegeben ist. Vielmehr werden die Außensegmente 2 kraftschlüssig mit dem zentralen Flansch (stehendes Teil der Turbinengondel beim Innenläufer, drehendes Teil des Rotors beim Außenläufer) verbunden. Alle Toleranzen in tangentialer Richtung werden über die Trennfugen 12 zwischen den Segmentmodulen 1 aufgefangen.

Die einzelnen Segmentmodule 1 werden in Umfangsrichtung über eine kraft- oder formschlüssige Verbindung direkt miteinander verbunden. Die zwischen den Segmentmodulen 1 befindlichen Trennfugen 12 werden hierfür beispielsweise mit Blechen ausgefüttert und anschließend werden die benachbarten Segmentmodule miteinander verschraubt.

Um zu erreichen, dass die Außensegmente 2 einen dichten Mantel bilden, können die Trennfugen 12 abgedichtet werden. Hierzu kann eine Gummidichtung oder ähnliches mit einer ausreichenden Elastizität zwischen den Außensegmenten 2 vorgesehen werden. Beispielsweise können hierzu O-Ringe bei der Vormontage der Segmentmodule 1 in die Außensegmente 2 an den Rändern eingearbeitet und eingeklebt werden.

Mit dem geschilderten Montagekonzept und den dargelegten Ausführungsdetails lässt sich eine segmentierte elektrische Maschine (beispielsweise ein direkt getriebener Windkraftgenerator) außerhalb der eigentlichen Fertigungsstätte (beispielsweise unmittelbar am Ort der Errichtung der Windturbine) montieren, ohne dass die bei segmentierten elektrischen Maschinen übliche aufwändige Ausrichtung der Stator- und Rotorsegmente zueinander erfolgen muss. Es kann auch auf eine Ausfütterung der Teilfugen zwischen den Segmenten bzw. Segmentmodulen verzichtet werden.

## Patentansprüche

1. Verfahren zum Montieren einer elektrischen Maschine, insbesondere eines Generators für eine Windkraftanlage mit den Schritten:
- paariges Montieren je eines Innensegments (3) an je eines von mehreren Außensegmenten (2) mit Hilfe jeweils mindestens eines Fixierelements (6), so dass mehrere Segmentmodule (1) entstehen, bei denen zwischen dem jeweiligen Innensegment (3) und dem jeweiligen (2) jeweils ein vorgegebener Luftspalt (5) besteht, wobei die Innensegmente (3) und Außensegmente (2) Ringsegmente sind und dem Rotor oder Stator der elektrischen Maschine zugeordnet sind,
- Befestigen der Innensegmente (3) der mehreren Segmentmodule (1) an einer Innenmontageeinrichtung (9), so dass die Segmentmodule (1) einen vollständigen Ring bilden,
- Befestigen der Außensegmente (2) der mehreren Segmentmodule (1) an einer Außenmontageeinrichtung und
- Entfernen der Fixierelemente (6) zwischen den Innensegmenten (3) und den Außensegmenten (2).

2. Verfahren nach Anspruch 1, wobei die Innensegmente (3) und/oder Außensegmente (2) in Umfangsrichtung aneinander befestigt werden.

3. Verfahren nach Anspruch 1 oder 2, wobei die Innensegmente (3) und/oder Außensegmente (2) jeweils mit einem Flansch (7) an der Innenmontageeinrichtung (9) oder Außenmontageeinrichtung befestigt werden.

4. Verfahren nach Anspruch 3, wobei jedes der Innensegmente (3) und Außensegmente (2) sich in Umfangsrichtung über einen ersten Winkelbereich erstreckt, und jeder Flansch (7) sich über einen kleineren Winkelbereich als den ersten Winkelbereich erstreckt.

5. Verfahren nach einem der vorhergehenden Ansprüche, wobei die Segmentmodule (1) so an der Innenmontageeinrichtung (9) und der Außenmontageeinrichtung befestigt werden, dass zwischen jeweils benachbarten Segmentmodulen (1) in Umfangsrichtung ein Spalt (12) verbleibt.

6. Verfahren nach Anspruch 5, wobei in jeden Spalt (12) ein Verbindungselement eingefügt wird, um die angrenzenden Segmente miteinander zu verbinden.

7. Verfahren nach Anspruch 5 oder 6, wobei in jeden Spalt (12) von außen ein Dichtelement eingefügt wird.

8. Elektrische Maschine insbesondere für eine Windkraftanlage mit
- einem Stator und
- einem Rotor,
- der Rotor und Stator der elektrischen Maschine in Innensegmente (3) und Außensegmente (2) segmentiert sind, wobei jeweils ein Innensegment (3) und ein Außensegment (2) paarig ein Segmentmodul bilden,
- die Innensegmente (3) und die Außensegmente (2) Ringsegmente sind,
- zwischen den Innensegmenten (3) und den Außensegmenten (2) jeweils ein vorgegebener Luftspalt (5) besteht,
- die Innensegmente (3) an einer Innenmontageeinrichtung (9) zu einem Ring befestigt sind, und
- die Außensegmente (2) an einer Außenmontageeinrichtung zu einem Ring befestigt sind.

9. Elektrische Maschine nach Anspruch 8, wobei die Innensegmente (3) und/oder Außensegmente (2) in Umfangsrichtung aneinander befestigt sind.

10. Elektrische Maschine nach Anspruch 8 oder 9, wobei die Innensegmente (3) und/oder Außensegmente (2) jeweils einen Flansch (7) zum Befestigen an der Innenmontageeinrichtung (9) oder Außenmontageeinrichtung aufweisen.

## Claims

1. Method for mounting an electric machine, especially a generator for a wind power plant, with the steps:
- Mounting one inner segment (3) on one of a number of outer segments (2) in pairs with the aid of at least one fixing element (6), so that a number of segment modules (1) are produced, in which a predetermined air gap (5) in each case arises between the respective inner segment (3) and the respective outer segment (2), wherein the inner segments (3) and outer segments (2) are ring segments and are assigned to the rotor or stator of the electric machine,
- Attaching the inner segments (3) of the number of segment modules (1) to an inner segment mounting device (9), so that the segment modules (1) form a complete ring,
- Attaching the outer segments (2) of the number of segment modules (1) to an outer segment mounting device and
- Removing the fixing elements (6) between the inner segments (3) and the outer segments (2).

2. Method according to claim 1, wherein the inner segments (3) and/or outer segments (2) are attached to each other in the circumferential direction.

3. Method according to claim 1 or 2, wherein the inner segments (3) and/or outer segments (2) are each attached with a flange (7) to the inner mounting device (9) or outer mounting device.

4. Method according to claim 3, wherein each of the inner segments (3) and outer segments (2) extends in the circumferential direction over a first angular range, and each flange (7) extends over a smaller angular range than the first angular range.

5. Method according to one of the preceding claims, wherein the segment module (1) is attached to the inner mounting device (9) and the outer mounting device so that a gap (12) remains between two adjacent segment modules (1) in the circumferential direction (12).

6. Method according to claim 5, wherein a connecting element is inserted into each gap (12) in order to connect the adjoining segments to one another.

7. Method according to claim 5 or 6, wherein a sealing element is inserted from outside into each gap (12).

8. Electric machine, especially for a wind power plant with
- a stator and
- a rotor,
- the rotor and stator of the electric machine are segmented into inner segments (3) and outer segments (2), wherein an inner segment (3) and an outer segment (2) in a pair form a segment module,
- the inner segments (3) and the outer segments (2) are ring segments,
- a predetermined air gap (5) exists in each case between the inner segments (3) and the outer segments (2),
- the inner segments (3) on an inner mounting device (9) are attached to a ring and
- the outer segments (2) on an outer mounting device (9) are attached to a ring.

9. Electric machine according to claim 8, wherein the inner segments (3) and/or outer segments (2) are attached to each other in the circumferential direction.

10. Electric machine according to claim 8 or 9, wherein the inner segments (3) and/or outer segments (2) each have a flange (7) for attachment to the inner mounting device (9) or outer mounting device.

## Revendications

1. Procédé de montage d'une machine électrique, notamment d'une génératrice pour une éolienne, comprenant les stades dans lesquels :
- on monte par paire respectivement un segment ( 3 ) intérieur sur respectivement l'un de plusieurs segments ( 2 ) extérieurs à l'aide de respectivement au moins un élément ( 6 ) d'immobilisation de manière à créer plusieurs modules ( 1 ) de segment, dans lesquels il y a respectivement en entrefer ( 5 ) prescrit entre le segment ( 3 ) intérieur respectif et le segment ( 2 ) extérieur respectif, les segments ( 3 ) intérieurs et les segments ( 2 ) extérieurs étant des segments annulaires et étant associés au rotor ou au stator de la machine électrique,
- on fixe les segments ( 3 ) intérieurs des plusieurs modules ( 1 ) de segment sur un dispositif ( 9 ) de montage intérieur, de manière à ce que les modules ( 1 ) de segment forment un anneau complet,
- on fixe les segments ( 2 ) extérieurs des plusieurs modules ( 1 ) de segment sur un dispositif de montage extérieur et
- on retire les éléments ( 6 ) d'immobilisation entre les segments ( 3 ) intérieurs et les segments ( 2 ) extérieurs.

2. Procédé suivant la revendication 1, dans lequel on fixe les segments ( 3 ) intérieurs et/ou les segments ( 2 ) extérieurs l'un à côté de l'autre dans la direction périphérique.

3. Procédé suivant la revendication 1 ou 2, dans lequel on fixe les segments ( 3 ) intérieurs et/ou les segments ( 2 ) extérieurs respectivement par une bride ( 7 ) sur le dispositif ( 9 ) de montage intérieur ou sur le dispositif de montage extérieur.

4. Procédé suivant la revendication 3, dans lequel chacun des segments ( 3 ) intérieurs et des segments ( 2 ) extérieurs s'étend dans la direction périphérique sur une première plage angulaire et chaque bride ( 7 ) s'étend sur une plage angulaire plus petite que la première plage angulaire.

5. Procédé suivant l'une des revendications précédentes, dans lequel on fixe les modules ( 1 ) de segment sur le dispositif ( 9 ) intérieur de montage et sur le dispositif extérieur de montage de manière à laisser subsister un intervalle dans la direction périphérique entre respectivement des modules ( 1 ) de segment voisins.

6. Procédé suivant la revendication 5, dans lequel on insère dans chaque intervalle ( 12 ) un élément de liaison pour lier entre eux les segments voisins.

7. Procédé suivant la revendication 5 ou 6, dans lequel on insère un élément d'étanchéité de l'extérieur dans chaque intervalle ( 12 ).

8. Machine électrique, notamment pour une éolienne, comprenant
- un stator et
- un rotor,
- le rotor et le stator de la machine électrique sont segmentés en segments ( 3 ) intérieurs et en segments ( 2 ) extérieurs, respectivement un segment ( 3 ) intérieur et un segment ( 2 ) extérieur formant par paire un module de segment,
- les segments ( 3 ) intérieurs et les segments ( 2 ) extérieurs sont des segments annulaires,
- il y a un entrefer ( 5 ) prescrit respectivement entre les segments ( 3 ) intérieurs et les segments ( 2 ) extérieurs,
- les segments ( 3 ) intérieurs sont fixés en un anneau à un dispositif ( 9 ) de montage intérieur, et
- les segments ( 2 ) extérieurs sont fixés en un anneau à un dispositif de montage extérieur.

9. Machine électrique suivant la revendication 8, dans laquelle les segments ( 3 ) intérieurs et/ou les segments ( 2 ) extérieurs sont fixés l'un à l'autre dans la direction périphérique.

10. Machine électrique suivant la revendication 8 ou 9, dans laquelle les segments ( 3 ) intérieurs et/ou les segments ( 2 ) extérieurs ont respectivement une bride ( 7 ) pour la fixation sur le dispositif ( 9 ) de montage intérieur ou sur le dispositif de montage extérieur.
